(19) Europäisches Patentamt

European Patent Office

Office européen des brevets

(11) **EP 1 192 223 B1**

(12) **EUROPÄISCHE PATENTSCHRIFT**

(45) Veröffentlichungstag und Bekanntmachung des Hinweises auf die Patenterteilung:
**13.08.2003 Patentblatt 2003/33**

(51) Int Cl.$^7$: **C08L 97/02**, C08G 12/32, C08G 12/36

(21) Anmeldenummer: **00942129.8**

(22) Anmeldetag: **23.06.2000**

(86) Internationale Anmeldenummer:
**PCT/EP00/05858**

(87) Internationale Veröffentlichungsnummer:
**WO 01/005891 (25.01.2001 Gazette 2001/04)**

(54) **FASERPLATTEN AUS POLYAMINEN ODER POLYAMIN-HALTIGEN AMINOPLASTHARZEN ALS BINDEMITTEL UND VERFAHREN ZU DEREN HERSTELLUNG**

FIBERPLATES MADE OF POLYAMINES OR POLYAMINE-CONTAINING AMINOPLAST RESINS AS BINDING AGENTS AND PROCESS OF THEIR MANUFACTURE

PANNEAUX DE FIBRES A BASE DE POLYAMINES OU DE RESINES AMINOPLASTES CONTENANT DE LA POLYAMINE COMME LIANTS ET PROCEDE DE LEUR PREPARATION

(84) Benannte Vertragsstaaten:
**AT BE CH CY DE DK ES FI FR GB GR IE IT LI LU MC NL PT SE**

(30) Priorität: **01.07.1999 DE 19930525**

(43) Veröffentlichungstag der Anmeldung:
**03.04.2002 Patentblatt 2002/14**

(73) Patentinhaber: **BASF AKTIENGESELLSCHAFT 67056 Ludwigshafen (DE)**

(72) Erfinder:
• **BIEDERMANN, Norbert**
 **D-67098 Bad Dürkheim (DE)**
• **WEINKÖTZ, Stephan**
 **D-67473 Lindenberg (DE)**
• **SCHERR, Günter**
 **D-67065 Ludwigshafen (DE)**
• **WOLF, Franz**
 **D-67480 Edenkoben (DE)**
• **LEHMANN, Gunter**
 **D-67134 Birkenheide (DE)**
• **LEHNEN, Ralph**
 **D-21465 Reinbek (DE)**

(56) Entgegenhaltungen:
**EP-A- 0 542 360**

• **DATABASE WPI Week 197815 Derwent Publications Ltd., London, GB; AN 1978-28475a XP002148125 "Fibreboard mfg. method - polyethyleneimine used at molecular mass 20000 and introduced into fibre pulp at pH 7-8" & SU 551 190 A (WOOD PROCESS IND), 3. Juni 1977 (1977-06-03)**
• **CHEMICAL ABSTRACTS, vol. 89, no. 14, 2. Oktober 1978 (1978-10-02) Columbus, Ohio, US; abstract no. 113011, "Wood fiber plates" XP002148124 & SU 612 819 A (BELORUSSIAN TECHNOLOGICAL INSTITUTE) 3. Juni 1978 (1978-06-03) in der Anmeldung erwähnt**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 192 223 B1

**Beschreibung**

Die vorliegende Erfindung betrifft ein Verfahren zur Herstellung von Faserplatten, wobei man

I. cellulosehaltige Fasern mit einer wässerigen Leimlösung beleimt, wobei die wässerige Leimlösung

a) für den Fall einer Leimlösung (a) ein aliphatisches Polyamin mit mindestens 3 Gruppen, ausgewählt aus der Gruppe der primären und sekundären Aminogruppen, welches ein gewichtsmittleres Molgewicht von 600 bis 1000000 g/mol aufweist und abgesehen von tertiären Aminogruppen im wesentlichen frei von sonstigen funktionellen Gruppen ist (Polyamin (P)); oder

b) für den Fall einer Leimlösung (b) eine Mischung aus einem Polyamin (P) und einem Aminoplastharz (b), welches aufgebaut ist aus

b1) Formaldehyd;
b2) einer Verbindung (b2) ausgewählt aus der Gruppe bestehend aus Harnstoff und Melamin, wobei das Verhältnis der Aminogruppen der Verbindung (b2) zum Formaldehyd 0,4 : 1 bis 3 : 1 beträgt;
b3) und gegebenenfalls bis zu 0,2 mol pro mol Formaldehyd einer sonstigen Verbindung (b3), die fähig ist, mit Formaldehyd in einer Polykondensationsreaktion zu reagieren;
b4) und gegebenenfalls bis zu 0,2 mol pro mol Aminogruppen der Verbindung (b2) einer sonstigen Verbindung (b4), die fähig ist, mit Aminogruppen in einer Polykondensationsreaktion zu reagieren; oder

c) für den Fall einer Leimlösung (c) ein Aminoplastharz (c), welches aufgebaut ist aus

c1) Formaldehyd;
c2) einer Verbindung (c2) ausgewählt aus der Gruppe bestehend aus Harnstoff und Melamin, wobei das Verhältnis der Aminogruppen der Verbindung (c2) zum Formaldehyd 0,3 : 1 bis 3,0 : 1 beträgt;
c3) einem Polyamin(P), wobei das molare Verhältnis der Summe der primären, sekundären und tertiären Aminogruppen des Polyamin P zu der Summe der primären Aminogruppen der Verbindung (c2) 0,0005 : 1 bis 2 : 1 beträgt;
c4) und gegebenenfalls bis zu 0,2 mol pro mol Formaldehyd einer sonstigen Verbindung (c4), die fähig ist, mit Formaldehyd in einer Polykondensationsreaktion zu reagieren; und
c5) gegebenenfalls bis zu 0,2 mol pro mol Aminogruppen der Verbindung (c2) einer sonstigen Verbindung (c5), die fähig ist, mit Aminogruppen in einer Polykondensationsreaktion zu reagieren;

enthält und die Feuchte der cellulosehaltigen Fasern bzw. der Wassergehalt des Leimes so eingestellt wird, daß die Feuchte der beleimten cellulosehaltigen Fasern nicht mehr als 150% beträgt; und

II. die gemäß Schritt (I) hergestellten beleimten cellulosehaltigen Fasern bei erhöhter Temperatur zu Faserplatten verpreßt.

Weiterhin betrifft die Erfindung Faserplatten, die nach diesem Verfahren hergestellt sind, sowie die Leimlösung (c).

Die Herstellung von Faserplatten ist allgemein bekannt und beispielsweise in der Monographie "MDF - Mitteldichte Faserplatten", Hans-Joachim Deppe, Kurt Ernst, 1996, DRW-Verlag Weinbrenner GmbH & Co., 70771 Leinfelden-Echterdingen beschrieben. Faserplatten können beispielsweise hergestellt werden, indem man cellulosehaltige Fasern mit Aminoplastharzen beleimt und anschließend bei erhöhter Temperatur verpreßt. Nachteilig an den so hergestellten Faserplatten ist, daß relativ viel Leim benötigt wird, um solche mit guten mechanischen Eigenschaften, insbesondere mit guter Querzugsfestigkeit herzustellen. Weiterhin müssen die eingesetzten cellulosehaltigen Fasern in der überwiegenden Anzahl der Anlagen nach der Beleimung vorgetrocknet werden, da die beleimten Fasern mit den herkömmlichen Bindemitteln nur eine Feuchte von bis zu 12 % aufweisen dürfen, will man Probleme bei der Herstellung der Faserplatten vermeiden.

Span- und Faserplatten haben, abgesehen von der Tatsache, daß beide Holzwerkstoffe sind, wenig gemeinsam. Dies betrifft zum einen die anwendungstechnischen Eigenschaften. Die vorgenannte Monographie von Deppe/Ernst weist hierauf z.B. auch ausdrücklich hin, wenn es um den Vergleich der anwendungstechnischen Eigenschaften der beiden Materialien geht (vgl. 1. Absatz, Kapitel 6.3 und 1. Absatz Kapitel 7 "In der Anwendungstechnik unterscheiden sich MDF und Spanplatten teilweise ganz erheblich"). Aus der vorgenannten Monographie ist es weiterhin bekannt, daß auch die Fertigungstechnologie voneinander verschieden ist und auch der eingesetzte Holzrohstoff andere Eigenschaften aufweist und anders aufbereitet wird. So wird z.B. in der Monographie in Kapitel 4.1 eingangs auf folgendes hingewiesen: "Bei der Aufbereitung des Rohstoffs bestehen zwischen Spanplatten- und MDF-Technologie entscheidende Unterschiede". Und eingangs Kapitel 4.2 heißt es weiter: "Faserstoff erfordert zur Trocknung technische Einrichtungen, die sich grundlegend von den in der Spanplattenindustrie gebräuchlichen Typen unterscheiden". Es überrascht deshalb den Fachmann auch nicht, daß sich Bindemittel für die Herstellung von Spanplatten und MDF nicht in gleicher Weise eignen. Während Leime, die als Bindemittel nur Polyethylenimin enthalten, hochwertiges MDF liefern (vgl. Beispiele 1 bis 6), ist aus demselben Leim die Herstellung von Spanplatten praktisch unmöglich (vgl. Vergleichsbeispiel 3). Hieraus zieht der Fachmann den Schluß, daß die Erfahrungen bezüglich der Herstellung und Eigenschaften von Spanplatten nicht auf MDF übertragbar sind.

Der Vollständigkeit halber sei dennoch erwähnt, daß aus der DE-A-4308089 bekannt ist, daß man Spanplatten mit einem Bindemittel, bei dem es sich um eine wässerige Lösung, enthaltend ein Polyamin, 0,01 bis 0,25 mol Zucker pro mol Aminogruppen und 0,01 bis 0,25 mol pro mol Aminogruppen Dicarbonsäurederivate, Aldehyde oder Epoxide, handelt, herstellt.

Die US 3642671 schlägt vor, Spanplatten herzustellen, indem man Holzspäne mit einem Leim, der Polyethylenimin und Dextrose oder andere Dextrose-ähnliche Verbindungen enthält zu beleimen und bei erhöhtem Druck und erhöhter Temperatur zu Spanplatten zu verpressen.

In Journal of Applied Polymer Science, Vol. 49, 229-245 (1993) ist beschrieben, daß mit modifizierten Harnstoff-Formaldehyd-Harzen gebundene Spanplatten sich in feuchtwarmer Umgebung als beständiger und stabiler erweisen als solche, die mit üblichen Aminoplastharzen hergestellt wurden. Als Modifikationsmittel werden niedermolekulare Polyamine bzw. deren Hydrochloride oder Polyalkylenoxiddiamine vorgeschlagen.

Aus den Patentschriften der USSR Nr 501890, 612819, 844273 und der JP-A S57-95399 ist MDF bekannt, das nach dem sog. Naßverfahren hergestellt wird. Nach diesem Verfahren wird eine wässerige Suspension aus cellulosehaltige Fasern, einem Polyethylenimin und anderen Hilfsmittel mit einem Wasseranteil von mehr als 95 % ausgegossen und zu Matten mit Wassergehalten von mehr als 60% (das entspricht Faserfeuchten von 150% bezogen auf atro Faser) vorgetrocknet. Diese Matten werden anschließend zu Hartfaserplatten verpreßt.

Von der Möbelindustrie werden insbesondere Faserplatten benötigt, die

- hoch verdichtet sind, damit sie gute mechanische Eigenschaften aufweisen,
- ca. 6 bis 40mm dick sind, damit sie zur Herstellung von Möbelseitenteilen oder Türen einsetzbar sind, und
- die beidseitig eine glatte Oberfläche aufweisen. Solche Platten werden als S2S-Platten (smooth-two sides) bezeichnet (vgl. Ullmann's Encyclopedia of Industrial Chemistry, 1996 VCH Verlagsgesellschaft, Vol. A 28, Kapitel 2.3.2.1, Seite 336)

Faserplatten mit diesem Eigenschaftsprofil werden aus ökonomischen Gründen nicht nach dem Naßverfahren hergestellt. Nach diesem Verfahren lassen sich nur Platten mit hoher Dichte mit einer Dicke von bis zu 5 mm wirtschaftlich herstellen (vgl. Ullmann's Encyclopedia of Industrial Chemistry, 1996 VCH Verlagsgesellschaft, Vol. A 28, Kapitel 2.3.2.2, Seite 337, 1. Spalte, 1. Absatz). Das liegt daran, daß es mit diesem Verfahren bei Anwendung wirtschaftlicher Preßbedingungen nicht gelingt, die Plattenmitte genügend zu verdichten und auszuhärten. Weiterhin weisen die nach dem Naßverfahren hergestellten Platten auf einer Seite eine rauhe Oberfläche auf. Dies ist durch das Herstellverfahren bedingt. Zur Entfernung des hohen Wasseranteil ist es nämlich beim Verpressen des Faserformlings erforderlich, daß ein Preßwerkzeug eine Siebstruktur aufweist. Das Muster dieser Siebstruktur ist auf eine der Seiten der Faserplatte eingeprägt. Derartige Platten sind als S1S-Platten (smooth-one side) bekannt. Diese unebene Oberfläche stört häufig bei der weiteren Verarbeitung, beispielsweise beim Beschichten mit einem Dekorpapier.

Weiterhin ist an dem Naßverfahren nachteilig, daß hierbei große Mengen an verunreinigtem Abwasser anfallen.

Die vorliegende Aufgabe war es deshalb, Faserplatten bereitzustellen, die die vorstehend genannten Nachteile nicht aufweisen und die insbesondere durch folgende Eigenschaften charakterisiert sind: eine Dicke von 6 bis 40 mm, eine Dichte von 500 bis 900 kg/m$^3$ und 2 glatte Oberflächen.

Demgemäß wurden die eingangs definierten Faserplatten, Verfahren zu deren Herstellung und Leimlösungen, aus denen sich derartige Platten herstellen lassen gefunden.

Als cellulosehaltige Fasern kommen die in Betracht, die üblicherweise zur Herstellung von MDF eingesetzt werden. Solche Rohstoffe sind beispielsweise in "MDF - Mitteldichte Faserplatten", Hans-Joachim Deppe, Kurt Ernst, 1996, DRW-Verlag Weinbrenner GmbH & Co., 70771 Leinfelden-Echterdingen, Kapitel 2, Seiten 25ff, beschrieben. Geeignet sind also Fasern von Einjahrespflanzen, Altpapierfasermaterial und bevorzugt Holzfasern.

Die Holzfasern werden üblicherweise durch hydrothermischen Aufschluß von Hackschnitzeln aus Holz hergestellt, z.B. indem man sie mit Dampf behandelt und anschließend mit Schneidwerkzeugen zerfasert (vgl. loc. cit. Kapitel 4.1). Die so erhaltenen Holzfasern weisen üblicherweise eine mittlere Länge von 0,2 bis 5 mm, einem mittleren Durchmesser von 10 bis 75 µm und eine mittleren Schlankheit von 40 bis 120 auf, wobei sich die Schlankheit aus dem Verhältnis von Länge zu Durchmesser errechnet. Diese Meßgrößen für die Charakterisierung der Holzfasern sind allgemein bekannt und beispielsweise in "Werkstoffe aus Holz", Autorenkollektiv, VEB Fachbuchverlag Leipzig 1975 Kapitel 4.2.1.1 beschrieben.

Als Bindemittel kommen die Leimlösungen (a), (b) oder (c) in Betracht.

Bei der Leimlösung (a) handelt es sich um eine wässerige Lösung eines aliphatischen Polyamins mit mindestens 3 funktionellen Gruppen, ausgewählt aus der Gruppe der primären und sekundären Aminogruppen, welches ein gewichtsmittleres Molgewicht von 600 bis 1000000 g/mol aufweist und abgesehen von tertiären Aminogruppen im wesentlichen frei von sonstigen funktionellen Gruppen ist (Polyamin (P)).

Derartige Lösungen weisen üblicherweise einen Feststoffgehalt an Polyamin (P) von 20 bis 80 Gew.% auf. Der Feststoffgehalt dieser Lösung wie auch der Leimlösungen (b) und (c) wird üblicherweise ermittelt, indem man eine definierte Gewichtsmenge (ca. 2 g) der entsprechenden Lösung auf ein Trockenblech ausgießt und sie 2 Stunden bei 120°C in einem Trockenschrank trocknet. Der Feststoffgehalt wird durch Differenzwägung ermittelt.

Bevorzugt wird als Polyamin (P) Polyethylenimin oder Polyvinylamin eingesetzt. Das Polyethylenimin weist bevorzugt ein gewichtsmittleres Molgewicht von 800 bis 100000 und das Polyvinylamin eines von 5000 bis 200000 auf.

Als Bindemittel kommen weiterhin Leimlösungen (b) in Betracht. Sie enthalten als Mischungskomponenten neben Wasser Polyamin (P) und ein Aminoplastharz (b), welches aufgebaut ist aus

b1) Formaldehyd;

b2) einer Verbindung (b2) ausgewählt aus der Gruppe, bestehend aus Harnstoff und Melamin, wobei das Verhältnis der Aminogruppen der Verbindung (b2) zum Formaldehyd 0,4 : 1 bis 3 : 1 beträgt; und

b3) gegebenenfalls bis zu 0,2 mol pro mol Formaldehyd einer sonstigen Verbindung (b3), die fähig ist, mit Formaldehyd in einer Polykondensationsreaktion zu reagieren

b4) und gegebenenfalls bis zu 0,2 mol pro mol Aminogruppen der Verbindung (b2) einer sonstigen Verbindung (b4), die fähig ist, mit Aminogruppen in einer Polykondensationsreaktion zu reagieren.

Derartige Leimharze (b) sind allgemein bekannt und beispielsweise in Ullmann's Encyclopedia of Industrial Chemistry, 1996 VCH Verlagsgesellschaft, Vol. A 2, Kapitel "Amino Resins", Seite 115 ff beschrieben.

Bei den Verbindungen (b3) handelt es sich beispielsweise um Guanidine, Thioharnstoff oder Alkalihydrogensulfit oder -sulfit.

Bei den Verbindungen (b4) handelt es sich beispielsweise um Carbonsäureanhydride, bevorzugt $C_1$- bis $C_{10}$-Mono- oder Dicarbonsäureanhydride, organische Halogenverbindungen wie $C_1$- bis $C_{10}$-Alkylhalogenide, Isocyanate, wie sie zur Herstellung von Polyurethanen allgemein bekannt sind, z.B. Hexamethylendiisocyanat, Aldehyde, insbesondere aliphatische $C_1$- bis $C_{10}$-Mono- oder Dialdehyde wie Succinaldehyd oder Acetaldehyd, Chlorhydrine, insbesondere Epichlorhydrin oder, Epoxide, die von diesen Chlorhydrinen abgeleitet sind.

Üblicherweise beträgt in der Leimlösung (b) das Verhältnis Polyamin (P) zum Aminoplastharz (b) 0,002 : 1 bis 100 : 1, bevorzugt 0,01 : 1 bis 5 : 1.

Üblicherweise werden Leimlösungen (b) mit einem Feststoffgehalt von 40 bis 70 % eingesetzt.

Die Leimlösungen (c) enthalten Aminoplastharze (c), welche aufgebaut sind aus:

c1) Formaldehyd;

c2) einer Verbindung (c2), ausgewählt aus der Gruppe bestehend aus Harnstoff und Melamin, wobei daß Verhältnis der Aminogruppen der Verbindungen (c2) zum Formaldehyd 0,3 : 1 bis 3,0 : 1 beträgt;

c3) einem Polyamin (P), wobei das molare Verhältnis der Summe der primären und sekundären Aminogruppen des Polyamin P zu der Summe der der primären, sekundären und tertiären Aminogruppen der Verbindung (c2) 0,0005 : 1 bis 2 : 1 beträgt;

c4) gegebenenfalls bis zu 0,2 mol pro mol Formaldehyd einer sonstigen Verbindung (c4), die fähig ist, mit Formaldehyd in einer Polykondensationsreaktion zu reagieren; und

c5) und gegebenenfalls bis zu 0,2 mol pro mol Aminogruppen der Verbindung (c2) einer sonstigen Verbindung (c5), die fähig ist, mit Aminogruppen in einer Polykondensationsreaktion zu reagieren.

Als Verbindungen (c4) kommen die gleichen in Betracht wie als Verbindungen (b3), als Verbindungen (c5) die gleichen wie als Verbindungen (b4).

Die Aminoplastharze (c) werden, abgesehen davon, daß zusätzlich ein Polyamin (P) eingesetzt wird, grundsätzlich genauso hergestellt wie die Aminoplastharze (b).

Im allgemeinen geht man dabei so vor, daß man

- in Schritt 1 eine wässerige Lösung von

- Formaldehyd;
- solchen Mengen der Verbindung (c2), daß das Verhältnis der Aminogruppen der Verbindung (c2) zum Formaldehyd 0,1 : 1 bis 2,0 : 1 beträgt;
- solchen Mengen des Polyamin (P), daß das molare Verhältnis der Summe der primären, sekundären und tertiären Aminogruppen des Polyamin (P) zu der Summe der primären Aminogruppen der Verbindung (c2) 0,0005 : 1 bis 2 : 1 beträgt;
- gegebenenfalls bis zu 0,2 mol pro mol Formaldehyd einer sonstigen Verbindung (c4); und
- gegebenenfalls in Mengen bis zu 0,2 mol pro mol Aminogruppen der Verbindung (c5);

bei einem pH Wert von 2,5 bis 8,5, bevorzugt bei pH 4,0 bis 6,5, und einer Temperatur von 50 bis 100°C so lange umsetzt, bis die Lösung eine Viskosität von 10 bis 2000 mPas aufweist, und

- in Schritt 2 man, falls erforderlich, den pH Wert auf 6 bis 9 anhebt, und, falls erforderlich, solche Mengen an Harnstoff zugibt, daß das im Endprodukt gewünschte Molverhältnis der Komponenten (c1), (c2), (c3) und (c4) erreicht wird und man die Reaktionsmischung bei einer Temperatur von 20 bis 100 °C solange weiter umsetzt, bis die Lösung eine Viskosität von 10 bis 2000 mPas aufweist.

Die Angaben zur Viskosität beziehen sich auf Proben, die bei 20°C vermessen wurden und vor der Messung auf einen Feststoffgehalt von 40 Gew.-% eingestellt wurden.

Falls der Feststoffgehalt der so hergestellten Harzlösung (c) geringer als gewünscht ist, ist es möglich, den Feststoffgehalt durch Abdestillieren von Wasser, bevorzugt bei vermindertem Druck, z.B. bei Drücken von 1 bis 10 mbar, auf Werte von 50 bis 80 % zu erhöhen.

Die Leimlösungen (a), (b) und (c) können weiterhin übliche Hilfsmittel wie Hydrophobiermittel, z.B. Paraffine oder Holzschutzmittel enthalten. Weiterhin können die Leimlösungen unmittelbar vor der Verarbeitung zur Verkürzung der Aushärtungszeiten mit einem Härter, z.B. einer Carbonsäure wie Ameisensäure oder einem Ammoniumsalz versetzt werden.

Die Leimlösungen (a), (b) und (c) werden nach üblichen Verfahren auf die cellulosehaltigen Fasern aufgebracht (vgl. "MDF - Mitteldichte Faserplatten", Hans-Joachim Deppe, Kurt Ernst, 1996, DRW-Verlag Weinbrenner GmbH & Co., 70771 Leinfelden-Echterdingen, Kapitel 4.3, Seiten 81ff.).

Üblicherweise geht man dabei so vor, daß man cellulosehaltige Fasern mit einer Feuchte von 0 bis 120 % in einer sog. Blowline beleimt, d.h., indem man die Fasern in einem Luft- oder Wasserdampfstrom verwirbelt und die Leimlösung einsprüht oder die Beleimung durch Vermischung von Fasern und Leimlösung in einem Trogmischer vornimmt. Die Feuchte ist definiert als das Verhältnis aus der Differenz aus dem tatsächlichen Gewicht des Holzes und dem entsprechenden Gewicht an atro (absolut trocknem) Fasern zu dem Gewicht an atro Fasern. Das Gewicht der absolut trockene Fasern wird bestimmt, indem man eine bestimmte Menge an Fasern in einem Trockenschrank bei 105°C über 16 Stunden trocknet.

Bei der Beleimung wird die Leimlösung in solchen Mengen eingesetzt, daß auf 100g atro Fasern

- für den Fall der Leimlösung (a) 0,2 bis 5 g
- für den Fall der Leimlösung (b) 0,5 bis 15 g Leimäquivalente (b), wobei sich die Leimäquivalente (b) wie folgt berechnen:

$$\text{Leimäquivalente (b)} = M(b) + 10 \times M(P)$$

   wobei

- M(b) die für die Herstellung einer bestimmten Menge Leimlösung (b) benötigte Menge an Aminoplastharz (b); und
- M(P) die für die Herstellung einer bestimmten Menge Leimlösung (b) benötigte Menge an Polyamin (P) bedeutet

für den Fall der Leimlösung (c) 1 bis 20 g Leimäquivalente (c),
wobei sich die Leimäquivalente (c) wie folgt berechnen:

$$\text{Leimäquivalente (c)} = M(c1) + M(c2) + 10 \times M(c3)$$

wobei

- M(c1) die für die Herstellung einer bestimmten Menge Leimlösung (c) benötigte Menge an Formaldehyd;
- M(c2) die für die Herstellung einer bestimmten Menge an Verbindung (c2); und
- M(c3) die für die Herstellung einer bestimmten Menge Leimlösung (c) benötigte Menge an Verbindung (c3) bedeuten

der entsprechenden Leimlösung (a), (b) oder (c), bezogen auf den Feststoffgehalt, kommen.

Die Menge an Leimlösung bzw deren Feststoffgehalt und der Feststoffgehalt der cellulosehaltigen Fasern wird so gewählt, daß die Feuchte der beleimten cellulosehaltigen Fasern nicht mehr als 150, bevorzugt von 2 bis 120 % beträgt.

Anschließend werden die beleimten cellulosehaltigen Fasern nach einem üblichen Verfahren zu Faserplatten verpreßt. Hierzu erzeugt man durch Aufstreuen der beleimten cellulosehaltigen Fasern auf einen Träger eine Fasermatte und verpreßt diese bei Temperaturen von 80 bis 250°C und bei Drücken von 5 bis 50 bar zu Faserplatten (vgl. loc. cit. Kapitel 4.5, Seiten 93ff).

Bevorzugt werden die beleimten cellulosehaltigen Fasern zu Fasermatten einer solchen Schichtdicke aufgestreut, daß nach dem Heißverpressen Faserplatten mit einer Dichte von 500 bis 900 kg/m$^3$ und einer Schichtdicke von 6 bis 40, bevorzugt 10 bis 25 mm resultieren. Die hierzu erforderlichen Preßzeiten betragen üblicherweise 4 bis 20 Sekunden pro mm Dicke der resultierenden Faserplatte.

Um Faserplatten mit glatten Oberflächen zu erzeugen, eignen sich als Preßwerkzeuge mit glatten Oberflächen, z.B. 2 polierte Stahlbänder, von denen eines als Träger für die Fasermatte dient oder eine Kombination aus einem polierten Stahlband als Träger und einer darüberlaufenden polierten Stahlwalze oder einer Kombination mehrerer polierter Stahlwalzen.

Die so erhaltenen Faserplatten können wie üblich weiterverarbeitet werden und eignen sich insbesondere für die Herstellung von Möbelteilen.

Experimenteller Teil

Es wurden Faserplatten aus unterschiedlichen Bindemitteln hergestellt. Als Bindemittel wurden wäßrige Lösungen verschiedener Polyvinylamine (PVAm) (MG = ca. 1000, 30000, 200000) und verschiedener Polyethylenimine (PEI) (MG = ca. 800, 2500, 5000) eingesetzt. Die Eigenschaften und genauen Herstellbedingungen können Tabelle 1 entnommen werden.

Tabelle 1

| Beispiel | 1 | 2 | 3 | 4 | 5 | 6 | 7 | 8 | 1 (V) | 2 (V) |
|---|---|---|---|---|---|---|---|---|---|---|
| Bindemittel | PVAm | PVAm | PVAm | PVAm | PEI | PEI | a) | b) | UF-Harz | UF-Harz |
| MG [Dalton] | 1000 | 11500 | 11500 | 11500 | 200000 | 2500 | 5000 | - | - | handels-üblich |
| pH | 12-13 | 12-13 | 12-13 | 7 | 12-13 | 12-13 | 12-13 | 9 | 9 | 9 |
| Faserfeuchte [%] | 12 | 12 | 20 | 20 | 20 | 12 | 12 | 12 | 12 | 20 |
| Beleimung [%] | 1.25 | 1.25 | 1.25 | 1.25 | 1.25 | 1.25 | 1.25 | 3.5 | 3.5 | 3.5 |
| Querzugsfestigkeit [N/mm$^2$] | 1.17 | 0.99 | 1.37 | 1.30 | 1.03 | 0.64 | 1.18 | 1.12 | 0.46 | keine Platten |
| Quellwert [%] | 71.2 | 59.8 | 47.0 | 28.0 | 40.2 | 85.3 | 66.9 | 57.2 | 80.1 | |

a)  Abmischung eines handelsüblichen UF-Harzes mit PEI (MG = 2500) im Verhältnis 90 : 10 (bezogen auf Festharz)

b)  gemäß Anspruch 6 aus Harnstoff, Formaldehyd und Polyethylenimin (PEI) hergestellte Leimlösung:
Verhältnis Aminogruppen des Harnstoffs zum Formaldehyd = 0.8 : 1
molares Verhältnis der Summe der Aminogruppen des Polyethylenimins zu der Summe der Aminogruppen des Harnstoffs = 0,2 : 1

Vergleichsbeispiel 3:

Herstellung von Spanplatten mit PEI MG = 5000

Problem: Platte bleibt an der Pressenetage kleben; beim Ablösen gerissen
Beim Pressen mit Trennpapier konnten zwar Platten erhalten werden, sie wiesen jedoch eine geringe Querzugsfestigkeit auf (0,4 N/mm2). Bei Quellversuchen zerfallen die Prüfkörper.
PVAm und PEI zeigen folgende Vorteile gegenüber herkömmlichem UF-Harz:

- geringerer Leimaufwand bei besserer Querzugsfestigkeit und ähnlichen oder besseren Quellwerten

- höhere Feuchtetoleranz, d.h. auch bei hohen Faserfeuchten (20%) können anders als mit UF-Harz Platten erhalten werden

**Patentansprüche**

1. Verfahren zur Herstellung von Faserplatten, wobei man

    I. cellulosehaltige Fasern mit einer wässrigen Leimlösung beleimt, wobei die wässerige Leimlösung

    a) für den Fall einer Leimlösung (a) ein aliphatisches Polyamin mit mindestens 3 Gruppen, ausgewählt aus der Gruppe der primären und sekundären Aminogruppen, welches ein gewichtsmittleres Molgewicht von 600 bis 1000000 g/mol aufweist und abgesehen von tertiären Aminogruppen im wesentlichen frei von sonstigen funktionellen Gruppen ist (Polyamin (P)); oder

    b) für den Fall einer Leimlösung (b) eine Mischung aus einem Polyamin (P) und einem Aminoplastharz (b), welches aufgebaut ist aus

        b1) Formaldehyd;
        b2) einer Verbindung (b2) ausgewählt aus der Gruppe bestehend aus Harnstoff und Melamin, wobei das Verhältnis der Aminogruppen der Verbindung (b2) zum Formaldehyd 0,4 : 1 bis 3 : 1 beträgt;
        b3) und gegebenenfalls bis zu 0,2 mol pro mol Formaldehyd einer sonstigen Verbindung (b3), die fähig ist, mit Formaldehyd in einer Polykondensationsreaktion zu reagieren;
        b4) und gegebenenfalls bis zu 0,2 mol pro mol Aminogruppen der Verbindung (b2) einer sonstigen Verbindung (b4), die fähig ist, mit Aminogruppen in einer Polykondensationsreaktion zu reagieren; oder

    c) für den Fall einer Leimlösung (c) ein Aminoplastharz (c), welches aufgebaut ist aus

        c1) Formaldehyd;
        c2) einer Verbindung (c2) ausgewählt aus der Gruppe bestehend aus Harnstoff und Melamin, wobei das Verhältnis der Aminogruppen der Verbindung (c2) zum Formaldehyd 0,3 : 1 bis 3,0 : 1 beträgt;
        c3) einem Polyamin P, wobei das molare Verhältnis der Summe der primären, sekundären und tertiären Aminogruppen des Polyamin (P) zu der Summe der primären Aminogruppen der Verbindung (c2) 0,0005 : 1 bis 2 : 1 beträgt;
        c4) und gegebenenfalls bis zu 0,2 mol pro mol Formaldehyd einer sonstigen Verbindung (c4), die fähig ist, mit Formaldehyd in einer Polykondensationsreaktion zu reagieren;
        c5) und gegebenenfalls bis zu 0,2 mol pro mol Aminogruppen der Verbindung (c2) einer sonstigen Verbindung (c5), die fähig ist, mit Aminogruppen in einer Polykondensationsreaktion zu reagieren;

    enthält und die Feuchte der cellulosehaltigen Fasern bzw. der Wassergehalt des Leimes so eingestellt wird, daß die Feuchte der beleimten cellulosehaltigen Fasern nicht mehr als 150% beträgt; und

    II. die gemäß Schritt (I) hergestellten beleimten cellulosehaltigen Fasern bei erhöhter Temperatur zu Faserplatten verpreßt.

2. Verfahren nach Anspruch 1, wobei die Leimlösung in solchen Mengen eingesetzt wird, daß auf 100g atro cellulosehaltige Fasern

- für den Fall der Leimlösung (a) 0,2 bis 5 g
- für den Fall der Leimlösung (b) 0,5 bis 15 g Leimäquivalente (b), wobei sich die Leimäquivalente (b) wie folgt berechnen:

$$\text{Leimäquivalente (b)} = M(b) + 10 \times M(P)$$

wobei

- M(b) die für die Herstellung einer bestimmten Menge Leimlösung (b) benötigte Menge an Aminoplastharz (b); und
- M(P) die für die Herstellung einer bestimmten Menge Leimlösung (b) benötigte Menge an Polyamin (P) bedeutet

- für den Fall der Leimlösung (c) 1 bis 20 g Leimäquivalente (c), wobei sich die Leimäquivalente (c) wie folgt berechnen:

$$\text{Leimäquivalente (c)} = M(c1) + M(c2) + 10 \times M(c3)$$

wobei

- M(cl) die für die Herstellung einer bestimmten Menge Leimlösung (c) benötigte Menge an Formaldehyd;
- M(c2) die für die Herstellung Menge an Verbindung (c2); und
- M(c3) die für die Herstellung einer bestimmten Menge Leimlösung (c) Menge an Verbindung (c3) bedeuten

der entsprechenden Leimlösung (a), (b) oder (c), bezogen auf den Feststoffgehalt, kommen.

3. Verfahren nach Anspruch 1 oder 2, wobei es sich bei dem Polyamin (P) um Polyethylenimin oder Polyvinylamin handelt.

4. Verfahren nach Anspruch 3, wobei das Polyethylenimin ein gewichtsmittleres Molgewicht von 800 bis 100000 und das Polyvinylamin eines von 5000 bis 200000 aufweist.

5. Verfahren nach den Ansprüchen 1 bis 4, wobei in der Leimlösung (b) das Verhältnis Polyamin (P) zum Aminoplastharz (b) 0,002 : 1 bis 100 : 1 beträgt.

6. Verfahren nach den Ansprüchen 1 bis 4, wobei man ein Aminoplastharz (c) einsetzt, welches aufgebaut ist aus

c1) Formaldehyd;
c2) einer Verbindung (c2), ausgewählt aus der Gruppe bestehend aus Harnstoff und Melamin, wobei das Verhältnis der Aminogruppen der Verbindung (c2) zum Formaldehyd 0.3 : 1 bis 3 : 1 beträgt;
c3) einem Polyamin (P), wobei das molare Verhältnis der Summe der primären, sekundären und tertiären Aminogruppen des Polyamin P zu der Summe der primären Aminogruppen der Verbindung (c2) 0,0005 : 1 bis 2 : 1 beträgt;
c4) gegebenenfalls bis zu 0,2 mol pro mol Formaldehyd einer sonstigen Verbindung (c4), die fähig ist, mit Formaldehyd in einer Polykondensationsreaktion zu reagieren; und
c5) und gegebenenfalls bis zu 0,2 mol pro mol Aminogruppen der Verbindung (c2) einer sonstigen Verbindung (c5), die fähig ist, mit Aminogruppen in einer Polykondensationsreaktion zu reagieren;

und erhältlich ist, indem man

- in Schritt 1 eine wässerige Lösung von

- Formaldehyd;
- solchen Mengen der Verbindung (c2), daß das Verhältnis der Aminogruppen der Verbindung (c2) zum Formaldehyd 0,1 : 1 bis 2,0 : 1 beträgt;
- solchen Mengen des Polyamin P, daß das molare Verhältnis der Summe der primären, sekundären und tertiären Aminogruppen des Polyamin (P) zu der Summe der primären Aminogruppen der Verbindung (c2) 0,0005 : 1 bis 2 : 1 beträgt; und
- gegebenenfalls bis zu 0,2 mol pro mol Formaldehyd einer sonstigen Verbindung (c4),
- gegebenenfalls in Mengen bis zu 0,2 mol pro mol Aminogruppen der Verbindung (c2) einer sonstigen Verbindung (c5),

bei einem pH Wert von 2,5 bis 8,5 und einer Temperatur von 50 bis 100°C so lange umsetzt, bis die Lösung eine Viskosität von 10 bis 2000 mPas (gemessen bei 20°C an einer Lösung mit einem Feststoffgehalt von 40%) aufweist, und

- in Schritt 2 man, falls erforderlich, den pH Wert auf 6 bis 9 anhebt, und; falls erforderlich, solche Mengen an Harnstoff zugibt, daß das im Endprodukt gewünschte Molverhältnis der Komponenten (c1), (c2), (c3) und (c4) erreicht wird und man die Reaktionsmischung bei einer Temperatur von 20 bis 100 °C solange weiter umsetzt, bis die Lösung eine Viskosität von 10 bis 2000 mPas (gemessen bei 20°C und an einer Lösung mit einem Feststoffgehalt von 40%) aufweist.

7. Verfahren nach den Ansprüchen 1 bis 6, wobei man als cellulosehaltige Fasern Holzfasern, Fasern von Einjahrespflanzen oder Altpapierfasermaterial einsetzt.

8. Verfahren nach Anspruch 7, wobei man als Holzfasern solche einsetzt, die erhältlich sind, indem man Hackschnitzel aus Holz hydrothermisch aufschließt und anschließend zerfasert.

9. Verfahren nach Anspruch 8, wobei man als Holzfasern solche mit einer mittleren Länge von 0,2 bis 5 mm, einem mittleren Durchmesser von 10 bis 75 μm und einer mittleren Schlankheit von 40 bis 120 einsetzt.

10. Verfahren nach den Ansprüchen 1 bis 9, wobei man die Beleimung so durchführt, daß man cellulosehaltige Fasern mit einer Feuchte von 0 bis 150% in einem Luft- oder Dampfstrom verwirbelt und die Leimlösung (a), (b) oder (c) aufsprüht.

11. Verfahren nach den Ansprüchen 1 bis 10, wobei man das Verpressen der beleimten celluloshaltigen Fasern vornimmt, indem man durch Aufstreuen der beleimten cellulosehaltigen Fasern auf einen Träger eine Fasermatte erzeugt und diese bei Temperaturen von 80 bis 250 °C und bei Drücken von 5 bis 50 bar zu Platten verpreßt.

12. Verfahren nach den Ansprüchen 1 bis 11, wobei die wässerige Leimlösung neben dem Polyamin (P) oder dem Aminoplastharz (b) oder (c) noch Paraffinwachs enthält.

13. Verfahren nach den Ansprüchen 1 bis 11, wobei man in Schritt II Preßwerkzeuge mit einer glatten Oberfläche einsetzt.

14. Faserplatten aus cellulosehaltigen Fasern, die nur mit Polyamin (P), sowohl mit Polyamin als auch mit einem Aminoplastharz (b) oder einem Aminoplastharz (c) gebunden sind und beidseitig eine glatte Oberfläche aufweisen.

15. Faserplatten aus cellulosehaltigen Fasern, die nur mit Polyamin (P), sowohl mit Polyamin als auch mit einem Aminoplastharz (b) oder einem Aminoplastharz (c) gebunden sind und eine Dichte von 500 bis 900 kg/m$^3$ und eine Dicke von 6 bis 40 mm aufweisen.

16. Aminoplastharze (c), aufgebaut aus

c1) Formaldehyd (Verbindung c1);
c2) einer Verbindung (c2), ausgewählt aus der Gruppe bestehend aus Harnstoff und Melamin, wobei das Verhältnis der Aminogruppen der Verbindungen (c2) zum Formaldehyd 0,1 : 1 bis 2 : 1 beträgt;
c3) einem Polyamin (P) wie in Anspruch 1 definiert, wobei das molare Verhältnis der Summe der primären, sekundären und tertiären Aminogruppen des Polyamin P zu der Summe der primären Aminogruppen der Verbindung (c2) 0,0005 : 1 bis 2 : 1 beträgt;
c4) gegebenenfalls bis zu 0,2 mol pro mol Formaldehyd einer sonstigen Verbindung (c4), die fähig ist, mit Formaldehyd in einer Polykondensationsreaktion zu reagieren;

c5) und gegebenenfalls bis zu 0,2 mol pro mol Aminogruppen der Verbindung (c2) einer sonstigen Verbindung (c5), die fähig ist, mit Aminogruppen in einer Polykondensationsreaktion zu reagieren;

und erhältlich, indem man

- in Schritt 1 eine wässerige Lösung von

  - Formaldehyd;
  - solchen Mengen der Verbindung (c2), daß das Verhältnis der Aminogruppen der Verbindung (c2) zum Formaldehyd 0,1 : 1 bis 2,0 : 1 beträgt;
  - solchen Mengen des Polyamin (P), daß das molare Verhältnis der Summe der primären, sekundären und tertiären Aminogruppen des Polyamin (P) zu der Summe der primären Aminogruppen der Verbindung (c2) 0,0005 : 1 bis 2 : 1 beträgt;
  - gegebenenfalls in Mengen bis zu 0,2 mol pro mol Formaldehyd Verbindungen (c4); und
  - gegebenenfalls in Mengen bis zu 0,2 mol pro mol Aminogruppen der Verbindung (c2) einer Verbindung (c5);

  bei einem pH Wert von 2,5 bis 8,5 und einer Temperatur von 50 bis 100°C so lange umsetzt, bis die Lösung eine Viskosität von 10 bis 2000 mPas (gemessen bei 20°C an einer Lösung mit einem Feststoffgehalt von 40%) aufweist, und

- in Schritt 2 man, falls erforderlich, den pH Wert auf 6 bis 9 anhebt, und, falls erforderlich, solche Mengen an Harnstoff zugibt, daß das im Endprodukt gewünschte Molverhältnis der Komponenten (c1), (c2) (c3) und (c4) erreicht wird und man die Reaktionsmischung bei einer Temperatur von 20 bis 100°C solange weiter umsetzt, bis die Lösung eine Viskosität von 20 bis 2000 mPas (gemessen bei 20°C und an einer Lösung mit einem Feststoffgehalt von 40%) aufweist.

## Claims

1. A process for producing a fiberboard panel by

   I. gluing cellulosic fibers with an aqueous glue solution comprising

   a) for a glue solution (a), an aliphatic polyamine having at least 3 groups selected from the group consisting of primary and secondary amino groups, having a weight average molar weight of from 600 to 1000000 g/mol, and being substantially free from other functional groups apart from tertiary amino groups (polyamine (P)); or

   b) for a glue solution (b), a mixture of a polyamine (P) and an amino resin (b) synthesized from

   b1) formaldehyde;
   b2) a compound (b2) selected from the group consisting of urea and melamine, the ratio of the amino groups of compound (b2) to formaldehyde being from 0.4 : 1 to 3 : 1;
   b3) and, if desired, up to 0.2 mol per mole formaldehyde of another compound, (b3), capable of reacting with formaldehyde in a polycondensation reaction;
   b4) and, if desired, up to 0.2 mol per mole amino groups of compound (b2) of another compound, (b4), capable of reacting with amino groups in a polycondensation reaction; or

   c) for a glue solution (c), an amino resin (c) synthesized from

   c1) formaldehyde;
   c2) a compound (c2) selected from the group consisting of urea and melamine, the ratio of the amino groups of compound (c2) to formaldehyde being from 0.3 : 1 to 3.0 : 1;
   c3) a polyamine P, the molar ratio of the sum of primary, secondary, and tertiary amino groups of polyamine (P) to the sum of primary amino groups of compound (c2) being from 0.0005 : 1 to 2 : 1;
   c4) and, if desired, up to 0.2 mol per mole formaldehyde of another compound, (c4), capable of reacting with formaldehyde in a polycondensation reaction;

c5) and, if desired, up to 0.2 mol per mole amino groups of compound (c2) of another compound, (c5), capable of reacting with amino groups in a polycondensation reaction;

and adjusting the moisture content of the cellulosic fibers and/or the water content of the glue such that the moisture content of the resinated cellulosic fibers is not more than 150%; and

II. compressing the glued cellulosic fibers produced in step (I) at elevated temperature to a fiberboard panel.

2. A process as claimed in claim 1, wherein the glue solution is used in amounts such that per 100 g of bone dry cellulosic fibers there are

- for glue solution (a) from 0.2 to 5 g
- for glue solution (b) from 0.5 to 15 g of glue equivalents (b), calculated as follows:

$$\text{glue equivalents (b)} = M(b) + 10 \times M(P)$$

where

- M(b) denotes the amount of amino resin (b) required to prepare a defined amount of glue solution (b); and
- M(P) denotes the amount of polyamine (P) required to prepare a defined amount of glue solution (b)

- for resin solution (c) from 1 to 20 g of glue equivalents (c), calculated as follows:

$$\text{glue equivalents (c)} = M(c1) + M(c2) + 10 \times M(c3)$$

where

- M(c1) denotes the amount of formaldehyde required to prepare a defined amount of glue solution (c);
- M(c2) denotes the amount of compound (c2) for the preparation; and
- M(c3) denotes the amount of compound (c3) required to prepare a defined amount of glue solution (c3)

of the corresponding glue solution (a), (b) or (c), based on the solids content.

3. A process as claimed in claim 1 or 2, wherein the polyamine (P) comprises polyethyleneimine or polyvinylamine.

4. A process as claimed in claim 3, wherein the polyethyleneimine has a weight average molar weight of from 800 to 100000 and the polyvinylamine has one of from 5000 to 200000.

5. A process as claimed in any of claims 1 to 4, wherein the ratio of polyamine (P) to amino resin (b) in the glue solution (b) is from 0.002 : 1 to 100 : 1.

6. A process as claimed in any of claims 1 to 4, wherein an amino resin (c) is used which is synthesized from

c1) formaldehyde;
c2) a compound (c2) selected from the group consisting of urea and melamine, the ratio of the amino groups of compound (c2) to formaldehyde being from 0.3 : 1 to 3 : 1;
c3) a polyamine (P), the molar ratio of the sum of primary, secondary, and tertiary amino groups of polyamine P to the sum of primary amino groups of compound (c2) being from 0.0005 : 1 to 2 : 1;
c4) if desired, up to 0.2 mol per mole formaldehyde of another compound, (c4), capable of reacting with formaldehyde in a polycondensation reaction; and
c5) if desired, up to 0.2 mol per mole amino groups of compound (c2) of another compound, (c5), capable of reacting with amino groups in a polycondensation reaction;

and is obtainable by

- in step 1, reacting an aqueous solution of

- formaldehyde;
- amounts of compound (c2) such that the ratio of the amino groups of compound (c2) to formaldehyde is from 0.1 : 1 to 2.0 : 1;
- amounts of polyamine P such that the molar ratio of the sum of the primary, secondary and tertiary amino groups of polyamine (P) to the sum of the primary amino groups of compound (c2) is from 0.0005 : 1 to 2 : 1; and
- if desired, up to 0.2 mol per mole formaldehyde of another compound (c4),
- if desired, in amounts up to 0.2 mol per mole amino groups of compound (c2), another compound (c5)

at a pH of from 2.5 to 8.5 and a temperature of from 50 to 100°C until the solution has a viscosity of from 10 to 2000 mPas (measured at 20°C on a solution having a solids content of 40%), and

- in step 2, where necessary, raising the pH to from 6 to 9 and, where necessary, adding urea in amounts such as to give the desired molar ratio of components (c1), (c2), (c3) and (c4) in the end product, and continuing to react the reaction mixture at a temperature of from 20 to 100°C until the solution has a viscosity of from 10 to 2000 mPas (measured at 20°C on a solution having a solids content of 40%).

7. A process as claimed in any of claims 1 to 6, wherein said cellulosic fibers comprise wood fibers, fibers from annual plants or wastepaper fiber material.

8. A process as claimed in claim 7, wherein said wood fibers are those obtainable by hydrothermally pulping woodchips and then defibering them.

9. A process as claimed in claim 8, wherein said wood fibers have an average length of from 0.2 to 5 mm, an average diameter of from 10 to 75 $\mu$m, and an average slenderness of from 40 to 120.

10. A process as claimed in any of claims 1 to 9, wherein gluing is conducted by swirling cellulosic fibers having a moisture content of from 0 to 150% in a stream of air or steam and spraying on glue solution (a), (b) or (c).

11. A process as claimed in any of claims 1 to 10, wherein compressing of the glued cellulosic fibers is performed by producing a fiber mat by scattering the glued cellulosic fibers onto a support and compressing said mat to a panel at temperatures of from 80 to 250°C under pressures of from 5 to 50 bar.

12. A process as claimed in any of claims 1 to 11, wherein further to polyamine (P) or amino resin (b) or (c) the aqueous glue solution comprises paraffin wax.

13. A process as claimed in any of claims 1 to 11, wherein press tools having a smooth surface are used in step II.

14. A fiberboard panel comprising cellulosic fibers bound with polyamine (P) alone or with polyamine and with an amino resin (b) or with an amino resin (c) and having a smooth surface on both sides.

15. A fiberboard panel comprising cellulosic fibers bound with polyamine (P) alone or with polyamine and with an amino resin (b) or with an amino resin (c) and having a density of from 500 to 900 kg/m$^3$ and a thickness of from 6 to 40 mm.

16. An amino resin (c) synthesized from

c1) formaldehyde (compound c1);
c2) a compound (c2) selected from the group consisting of urea and melamine, the ratio of the amino groups of compound (c2) to formaldehyde being from 0.1 : 1 to 2 : 1;
c3) a polyamine (P) as defined in claim 1, the molar ratio of the sum of primary, secondary, and tertiary amino groups of polyamine P to the sum of primary amino groups of compound (c2) being from 0.0005 : 1 to 2 : 1;
c4) if desired, up to 0.2 mol per mole formaldehyde of another compound, (c4), capable of reacting with formaldehyde in a polycondensation reaction;
c5) and, if desired, up to 0.2 mol per mole amino groups of compound (c2) of another compound, (c5), capable of reacting with amino groups in a polycondensation reaction;

and obtainable by

- in step 1, reacting an aqueous solution of

  - formaldehyde;
  - amounts of compound (c2) such that the ratio of the amino groups of compound (c2) to formaldehyde is from 0.1 : 1 to 2.0 : 1;
  - amounts of polyamine (P) such that the molar ratio of the sum of the primary, secondaren and tertiary amino groups of polyamine (P) to the sum of the primary amino groups of compound (c2) is from 0.0005 : 1 to 2 : 1; and
  - if desired, in amounts up to 0.2 mol per mole formaldehyde, of another compound (c4); and
  - if desired, in amounts up to 0.2 mol per mole amino groups of compound (c2), a compound (c5)

  at a pH of from 2.5 to 8.5 and a temperature of from 50 to 100°C until the solution has a viscosity of from 10 to 2000 mPas (measured at 20°C on a solution having a solids content of 40%), and

- in step 2, where necessary, raising the pH to from 6 to 9 and, where necessary, adding urea in amounts such as to give the desired molar ratio of components (c1), (c2), (c3) and (c4) in the end product, and continuing to react the reaction mixture at a temperature of from 20 to 100°C until the solution has a viscosity of from 20 to 2000 mPas (measured at 20°C on a solution having a solids content of 40%).

## Revendications

1. Procédé de préparation de panneaux de fibres dans lequel

   I. On enduit des fibres contenant de la cellulose avec une solution aqueuse de colle, la solution aqueuse de colle contenant

   a) dans le cas d'une solution de colle (a) une polyamine aliphatique comportant au moins trois groupes choisis dans le groupe des groupes amino primaires et secondaires, qui présentent un poids moléculaire moyen en poids de 600 à 1 million de grammes/mole et sont, en dehors des groupes amino tertiaires, essentiellement dépourvus d'autres groupes fonctionnels (polyamine (P)) ; ou
   b) dans le cas d'une solution de colle (b) un mélange d'une polyamine (P) et d'une résine aminoplaste (b), qui est constitué de

       b1) formaldéhyde ;
       b2) un composé (b2) choisi dans le groupe constitué par l'urée et la mélamine, le rapport des groupes amino du composé b2) au formaldéhyde étant de 0,4 :1 à 3 :1 ;
       b3) et le cas échéant jusqu'à 0,2 mole par mole de formaldéhyde d'un autre composé (b3), qui est apte à réagir avec le formaldéhyde en une réaction de polycondensation ;
       b4) et le cas échéant jusqu'à 0,2 mole par mole de groupes amino du composé (b2), d'un autre composé (b4), qui est apte à réagir avec les groupes amino en une réaction de polycondensation ; ou

   c) dans le cas d'une solution de colle (c) une résine aminoplaste (c) qui est constituée de

       c1) formaldéhyde,
       c2) un composé (c2) choisi dans le groupe constitué par l'urée et la mélamine, le rapport des groupes amino du composé (c2) au formaldéhyde étant de 0,3 :1 à 3,0 :1 ;
       c3) un polyamine P, où le rapport molaire de la somme des groupes amino primaires, secondaires et tertiaires de la polyamine (P) à la somme des groupes amino primaires du composé (c2) est de 0,0005 :1 à 2 :1 ;
       c4) et le cas échéant jusqu'à 0,2 mole par mole de formaldéhyde, d'un autre composé (c4), qui est apte à réagir avec le formaldéhyde en une réaction de polycondensation ;
       c5) et le cas échéant jusqu'à 0,2 mole, par mole de groupes amino du composé (c2), d'un autre composé (c5), qui est apte à réagir avec les groupes amino en une réaction de polycondensation ;

   et l'humidité des fibres contenant de la cellulose ou selon les cas la teneur en eau de la colle étant établie de manière que l'humidité des fibres contenant de la cellulose enduite ne dépasse pas 150 % ; et
   II. Les fibres contenant de la cellulose enduites et produites selon l'étape (I) sont pressées à une température augmentée pour obtenir des panneaux de fibres.

2. Composé selon la revendication 1, dans lequel la solution de colle est utilisée à des quantités telles que l'on ait, pour 100 g de fibres contenant de la cellulose

- dans le cas de la solution de colle (a) de 0,2 à 5 g,
- dans le cas de la solution de colle (b) 0,5 à 15 g d'équivalent de colle (b), où les équivalents de colle (b) se calculent comme suit,

$$\text{équivalent de colle (b)} = M(b) + 10 \times M(P)$$

où

- $M(b)$ est la quantité nécessaire de résine aminoplaste (b) pour la production d'une quantité déterminée de solution de colle (b) et
- $M(P)$ est la quantité de polyamine (P) nécessaire pour la production d'une quantité déterminée de la solution de colle (b)

- dans le cas de la solution de colle (c) de 1 à 20 g d'équivalents de colle (c), les équivalents de colle (c) se calculant comme suit :

$$\text{équivalent de colle (c)} = M(c1) + M(c2) + 10\, M(c3)$$

où

- $M(c1)$ est la quantité de formaldéhyde nécessaire pour la production d'une quantité déterminée d'une solution de colle (c) ;
- $M(c2)$ est la quantité de composé (c2) nécessaire pour la production d'une quantité de composé (c2); et
- $M(c3)$ est la quantité de composé (c3) nécessaire pour la production d'une quantité déterminée d'une solution de colle (c)

de la solution de colle (a), (b) ou (c) correspondante, par rapport à la teneur en solides.

3. Procédé selon la revendication 1 ou 2, dans lequel, pour ce qui est de la polyamine (P), il s'agit de polyéthylène imine ou de polyvinyl amine.

4. Procédé selon la revendication 3, dans lequel la polyéthylène imine a un poids moléculaire moyen en poids de 800 à 100 000 et la polyvinyl amine a un poids moléculaire de 5 000 à 200 000.

5. Procédé selon l'une quelconque des revendications 1 à 4, dans lequel, dans la solution de colle (b), le rapport de la polyamine (P) à la résine aminoplaste (b) est de 0,002 :1 à 100 :1.

6. Procédé selon les revendications 1 à 4, dans lequel on utilise une résine aminoplaste (c) qui est constituée de

c1) formaldéhyde,
c2) un composé (c2) choisi dans le groupe constitué par l'urée et la mélamine, le rapport des groupes amino du composé (c2) au formaldéhyde étant de 0,3 :1 à 3 :1 ;
c3) une polyamine (P), où le rapport molaire de la somme des groupes amino primaires, secondaires et tertiaire de la polyamine (P) à la somme des groupes amino primaires du composé (c2) est de 0,0005 :1 à 2 :1 ;
c4) le cas échéant jusqu'à 0,2 mole, par mole de formaldéhyde, d'un autre composé (c4), qui est apte à réagir avec le formaldéhyde en une réaction de polycondensation ; et
c5) et le cas échéant jusqu'à 0,2 mole, par mole de groupes amino du composé c2), d'un autre composé (c5), qui est apte à réagir avec les groupes amino en une réaction de polycondensation ;

et que l'on peut obtenir

- dans l'étape 1 en faisant réagir une solution aqueuse de

  - formaldéhyde ;
  - les quantités de composé (c2) étant telles que le rapport des groupes amino (c2) au formaldéhyde est de 0,1 :1 à 2,0 :1 ;
  - les quantités de polyamine (P), étant telles que le rapport molaire de la somme des groupes amino primaires, secondaires et tertiaires de la polyamine (P) à la somme des groupes amino primaires du composé (c2) est de 0,0005 :1 à 2 :1 ; et
  - le cas échéant jusqu'à 0,2 mole, par mole de formaldéhyde, d'un autre composé (c4),
  - le cas échéant jusqu'à 0,2 mole, par mole de groupes amino du composé (c2) d'un autre composé (c5),

    à un pH de 2,5 à 8,5 et à une température dé 50 à 100°C jusqu'à ce que la solution présente une viscosité de 10 à 2000 mPas (mesurée à 20°C sur une solution ayant une teneur en solides de 40 %) et

  - dans l'étape 2, si nécessaire, on élève le pH à 6 à 9 et, si nécessaire, on ajoute des quantités telles d'urée que dans le produit final le rapport molaire désiré des composants (c1), (c2), (c3) et (c4) soit atteint et que l'on fasse réagir le mélange réactionnel à une température allant de 20 à 100°C jusqu'à ce que la solution présente une viscosité de 10 à 2000 mPas (mesurée à 20°C et sur une solution ayant une teneur en solides de 40 %).

7. Procédé selon les revendications 1 à 6, dans lequel on utilise comme fibres contenant de la cellulose des fibres de bois, des fibres de plantes annuelles ou un matériau provenant de fibres de papier recyclé.

8. Procédé selon la revendication 7, dans lequel on utilise comme fibres de bois des fibres que l'on peut obtenir en désagrégeant des copeaux de bois par un moyen hydrothermique puis en les réduisant en fibres.

9. Procédé selon la revendication 8, dans lequel on utilise comme fibres de bois les fibres ayant une longueur moyenne de 0,2 à 5 mm, un diamètre moyen de 10 à 75 μm et un allongement moyen de 40 à 120.

10. Procédé selon les revendications 1 à 9, dans lequel on réalise l'enduction de manière à faire tourbillonner les fibres contenant de la cellulose à une humidité de 0 à 150 % dans un courant d'air ou de vapeur et en pulvérisant la solution de colle (a), (b) ou (c).

11. Procédé selon les revendications 1 à 10, dans lequel on procède au pressage des fibres contenant de la cellulose enduite en produisant, par pulvérisation des fibres contenant de la cellulose enduite sur un support, un mat de fibres, et en pressant celui-ci à des températures de 80 à 250°C et à des pressions de 5 à 50 bars pour obtenir des panneaux.

12. Procédé selon les revendications 1 à 11, dans lequel la solution aqueuse de colle contient encore, outre la polyamine (P) ou la résine aminoplaste (b) ou (c), une cire paraffinique.

13. Procédé selon les revendications 1 à 11, dans lequel, dans l'étape II, on utilise des outils de pressage ayant une surface lisse.

14. Panneaux de fibres en fibres contenant de la cellulose qui ne sont liés qu'avec de la polyamine (P), aussi bien avec de la polyamine qu'avec une résine aminoplaste (b) ou une résine aminoplaste (c), et qui présentent des deux côtés une surface lisse.

15. Panneaux de fibres en fibres contenant de la cellulose, qui sont liés uniquement avec une polyamine (P), aussi bien avec une polyamine qu'avec une résine aminoplaste (b), ou avec une résine aminoplaste (c), et qui présentent une densité de 500 à 900 kg/m$^3$ et une épaisseur de 6 à 40 mm.

16. Résine aminoplaste (c) constituée de

    c1) formaldéhyde (composé c1);
    c2) un composé (c2) choisi dans le groupe constitué par l'urée et la mélamine, le rapport des groupes amino du composé (c2) au formaldéhyde étant de 0,1 :1 à 2:1 ;
    c3) une polyamine (P) telle que définie dans la revendication 1, le rapport molaire de la somme des groupes amino primaires, secondaires et tertiaires de la polyamine (P) à la somme des groupes amino primaires du composé (c2) étant de 0,0005 :1 à 2 :1 ;

c4) le cas échéant jusqu'à 0,2 mole, par mole de formaldéhyde, d'un autre composé (c4), qui est apte à réagir avec le formaldéhyde en une réaction de polycondensation,

c5) et le cas échéant jusqu'à 0,2 mole, par mole de groupes amino du composé (c2), d'un autre composé (c5), qui est apte à réagir avec les groupes amino dans une réaction de polycondensation ;

et que l'on peut obtenir en faisant réagir une solution de

- dans l'étape 1 en faisant réagir une solution aqueuse de

  - formaldéhyde ;
  - de quantités telles de composé (c2) que le rapport des groupes amino du composé (c2) au formaldéhyde est de 0,1 :1 à 2,0 :1 ;
  - des quantités telles de polyamine (P), que le rapport molaire de la somme des groupes amino primaires, secondaires et tertiaires de la polyamine (P) à la somme des groupes amino primaires du composé (c2) est de 0,0005 :1 à 2 :1 ;
  - le cas échéant à des quantités allant jusqu'à 0,2 mole, par mole de formaldéhyde de composés (c4), et
  - le cas échéant à des quantités allant jusqu'à 0,2 mole, par mole de groupes amino du composé (c2) d'un composé (c5) ;

  à un pH de 2,5 à 8,5 et à une température de 50 à 100°C jusqu'à ce que la solution présente une viscosité de 10 à 2000 mPas (mesurée à 20°C sur une solution ayant une teneur en solides de 40 %) et

- dans l'étape 2, si nécessaire, on élève le pH à 6 à 9 et, si nécessaire, on ajoute des quantités telles d'urée que le rapport molaire désiré des composants (c1), (c2), (c3) et (c4) dans le produit final soit atteint et que l'on fasse réagir plus avant le mélange réactionnel à une température allant de 20 à 100°C jusqu'à ce que la solution présente une viscosité de 20 à 2000 mPas (mesurée à 20°C et sur une solution ayant une teneur en solides de 40 %).